# EUROPÄISCHE PATENTSCHRIFT

(11) **EP 1 305 859 B1**
(45) Veröffentlichungstag und Bekanntmachung des Hinweises auf die Patenterteilung: **22.09.2010**
(21) Anmeldenummer: 01954050.9
(22) Anmeldetag: 20.07.2001
(51) Int. Cl.: H02G 3/04

(54) **BAUTEIL MIT EINEM HOHLQUERSCHNITT**
COMPONENT WITH A HOLLOW CROSS-SECTION
COMPOSANT DE SECTION TRANSVERSALE CREUSE

(30) Priorität: 01.08.2000 DE 10037374
(43) Veröffentlichungstag der Anmeldung: 02.05.2003
(73) Patentinhaber: Rhodia Engineering Plastics SA, 69190 Saint-Fons (FR)
(72) Erfinder: PÖTSCH, Gerhard, 79108 Freiburg (DE); OP DE LAAK, Marcel, 79106 Freiburg (DE); CHOMIER, Didier, F-42800 St. Romain en Jarez (FR); HOLTERMANN, Stefan, 79098 Freiburg (DE); SCHWITZER, Klaus, 79276 Reute (DE)
(74) Vertreter: Maucher, Wolfgang
(86) Internationale Anmeldenummer: PCT/EP2001/008390
(87) Internationale Veröffentlichungsnummer: WO 2002/011261

(56) Entgegenhaltungen:
- DE-U- 9 104 473
- DE-U- 9 310 405

## Beschreibung

Die Erfindung betrifft ein Bauteil mit einem wenigstens teilweise geschlossenen, kanalförmigen Hohlquerschnitt, welches Bauteil aus zwei einzelnen Teilen zusammengesetzt ist, die zumindest eine linienförmige oder flächige Berührstellen miteinander haben, wobei wenigstens ein erstes Teil einen konkaven Querschnitt hat und mit dem zweiten Teil zum Schließen des Hohlquerschnitts in Gebrauchsstellung verbunden ist.

Ein vergleichbares Bauteil ist als Verbundbauteil aus Metallblechen, vorzugsweise aus Aluminiumblechen, aus dem DE Gebrauchsmuster 81 07 503.0 bekannt. Ein erstes Bauteil hat dabei einen etwa bogen- oder rinnenförmigen Querschnitt und ein zweites Teil einen etwa U-förmigen Querschnitt. Die beiden dieses Bauteil bildenden einzelnen Teile sind jeweils aus einem Metallblech gebildet. Dazwischen befindet sich eine Dichtungsschicht, die die beiden Metallbleche insbesondere auch in ihrem Berührbereich voneinander trennt. Für die Tragfähigkeit dieses Verbundbauteiles ist also erforderlich, die Metallbleche in ihren Querschnitten auf die zu erwartenden Kräfte auszurichten, so daß je nach gewünschter Belastbarkeit ein relativ schweres Bauteil entsteht, selbst wenn es aus Aluminiumblechen gefertigt ist.

Ferner ist vorgesehen, daß die aus Kunststoff bestehende Isolier- oder Dichtungsschicht durch einen Kaschiervorgang auf eines der Bleche aufgebracht ist, was aufwendig und demgemäß teuer ist.

Es besteht deshalb die Aufgabe, ein Bauteil der eingangs definierten Art zu schaffen, bei welchem ein geringeres Gewicht bei dennoch guter Belastbarkeit ermöglicht wird, wobei gleichzeitig die Herstellung möglichst einfach sein soll. Gleichzeitig sollen die guten Verformungseigenschaften von Metall bei Überlastung erhalten bleiben.

Zur Lösung dieser Aufgabe ist das eingangs definierte Bauteil **dadurch gekennzeichnet, daß** wenigstens das erste Teil ein Metallprofil ist, das auf wenigstens einer Seite zumindest bereichsweise mit einer das Widerstandsmoment erhöhenden Kunststoffschicht umspritzt ist oder auf das auf wenigstens einer Seite zumindest bereichsweise eine das Widerstandsmoment erhöhende Kunststoffschicht aufgespritzt ist, wobei die Kunststoffschicht bis zu dem umlaufenden Rand oder den nebeneinander oder parallel laufenden Rändern des ersten Teiles reicht und/oder den oder die Ränder bildet und dort eine Anlagestelle für das zweite Teil aufweist, und daß das zweite Teil aus Kunststoff besteht, der in Gebrauchsstellung mit der Kunststoffschicht des ersten Teiles an den Anlagestellen verschweißt ist.

Auf diese Weise entsteht ein geschlossenes oder bevorzugt ein längliches Bauteil, welches einen Hohlquerschnitt hat, insgesamt also als Hohlprofil gestaltet ist, das einen verminderten Metallanteil hat, der aber dennoch ein elastisch oder plastisch nachgiebiges Verformungsverhalten bewirkt.

Ein geschlossenes Bauteil könnte dabei ein solches sein, bei welchem das erste Teil konkav gestaltet ist und einen umlaufenden Rand hat, an welchem das zweite Teil angeschlossen werden kann. Ein längliches Bauteil hingegen weist an seinem ersten Teil zweckmäßigerweise zwei nebeneinander laufende Ränder auf, zwischen denen sich sein vertiefter und mit Kunststoff umspritzter Querschnitt befindet, so daß insgesamt das erwähnte längliche Bauteil entsteht.

In beiden Fällen können hohe Kräfte aufgenommen werden, weil das erste Teil ein Metallprofil ist, welches hinsichtlich seines Widerstandsmomentes durch den aufgespritzten oder umspritzten Kunststoff zu einem zumindest zweischichtigen Profil gemacht ist. Wenn es sich dabei um ein einen U- oder rinnenförmigen Querschnitt aufweisendes Teil handelt, ist diese Zweischichtigkeit für ein hohes Widerstandsmoment besonders effektiv. Während also der Metallanteil die bei Überlastung und Verformung positiven Eigenschaften einer elastischen und/oder plastischen Verformung hat, wird das gesamte Teil und damit das gesamte Bauteil durch die Kunststoffschicht verstärkt, mit der das Metallprofil zumindest auf einer Seite umspritzt ist, was zu einer erheblich stärkeren und tragfähigeren Kunststoffschicht als eine aufkaschierte Kunststoffolie führt. Gleichzeitig ist die Herstellung auch dadurch vereinfacht, daß die Verbindung des Metallprofiles mit der Kunststoffschicht durch Auf- oder Umspritzen weitgehend automatisiert werden kann und daß das anschließende Verschweißen mit dem zweiten abschließenden Teil ebenfalls automatisch erfolgen kann.

Die Erfindung erlaubt eine besonders vorteilhafte und zweckmäßige Ausgestaltung dahingehend, daß die Kunststoffschicht des ersten Teiles in ihrem Verlauf unterschiedliche Dicken und/oder Unterbrechungen aufweisen kann. Somit kann das gesamte Bauteil durch die Kunststoffschicht je nach Belastung mehr oder weniger verstärkt werden. Ferner können Anschlußstellen beispielsweise für in das Bauteil führende Leitungen oder Kabel entsprechend vorgesehen werden, indem an solchen Stellen die Kunststoffschicht ganz weggelassen wird. Darüber hinaus kann sie an solchen Stellen entfallen, an denen keine hohen Kräfte zu erwarten sind oder aber bei überhöhten Belastungen eine gezielte Nachgiebigkeit angestrebt wird, wie es beispielsweise im Kraftfahrzeugbau zur Unfallvorsorge gewünscht sein kann. Die Bildung eines ersten Teiles des Bauteiles aus einem Metallprofil und einer Kunststoffschicht ermöglicht also die Anpassung an unterschiedlichste Anforderungen, weil beim Spritzen der Kunststoffschicht diese mehr oder weniger beliebig gestaltet und stellenweise sogar weggelassen werden kann. Unter "Metallprofil" wird dabei nicht nur ein längliches Profil verstanden, sondern auch eine insgesamt konkave Form, die beispielsweise schüsselförmig ist oder konkret eine Autotüre, ein Stoßfänger oder dergleichen sein könnte.

Eine weitere Ausgestaltungsmöglichkeit der Erfindung, die durch die Erfindung möglich gemacht wird, kann darin bestehen, daß mit der durch Umspritzen angebrachten oder aufgespritzten Kunststoffschicht Teile oder Elemente, beispielsweise Befestigungselemente, Kabelkanäle oder dergleichen einstückig verbunden und/oder mitangespritzt sind. Es kann also bei der Bildung des ersten Teiles aus einem Metallprofil oder Metallgerüst und der Kunststoffschicht gleich auch ein an diesem Bauteil eventuell erforderliches Befestigungselement oder dergleichen mitangeformt und angespritzt werden, so daß dieses Zusatzteil nicht nachträglich montiert werden muß. Somit wird das gesamte Bauteil besonders gut geeignet zum Aufnehmen von Leitungen, die mit den schon angespritzten Befestigungselementen, Kabelkanälen oder dergleichen erfasst und fixiert werden können.

Besonders günstig ist es, wenn das Metallprofil und damit das erste Teil - wie vorstehend schon angedeutet - einen U-förmigen oder rinnenförmigen Querschnitt hat und die Kunststoffschicht an der Innenseite des U-Querschnittes angeordnet ist und bis zu den Rändern oder bis auf die Außenseite der Ränder dieses Metallprofiles verläuft. Somit ist diese Kunststoffschicht dem zweiten Teil, welches seinerseits aus damit verschweißbaren Kunststoff besteht, unmittelbar zugewandt. Ferner ergibt sich dadurch ein Hohlquerschnitt an dem Bauteil, der innenseitig praktisch vollständig aus Kunststoff besteht und somit keiner Korrosionsgefahr unterliegt. Gleichzeitig schützt und armiert die außenliegende Metallschicht des Metallprofiles das Bauteil zumindest über einen großen Teil seines Umfanges.

Das zweite Teil kann in seinem Verlauf Durchbrüche aufweisen oder unterbrochen und/oder mehrteilig ausgebildet sein. Somit kann ein Bauteil mit einem Hohlquerschnitt gebildet werden, dessen Inneres dennoch zugänglich bleibt, sofern dies bei seiner Anwendung zweckmäßig ist. Vor allem bei einer mehrteiligen oder unterbrochenen Ausbildung können die das zweite Teil bildenden Bestandteile unter Umständen auch in ihrer Anordnung relativ zu dem ersten Teil variiert werden.

Das zweite Teil kann aus einer oder mehreren flachen oder zumindest bereichsweise konvex oder konkav gewölbten Platte(n) aus Kunststoff gebildet sein, die über den Rand oder die Ränder des ersten konkaven Teiles, insbesondere des U- oder rinnenförmig profilierten Teiles reicht(reichen). Vor allem eine etwas konvex gewölbte Platte kann dabei die Steifigkeit und damit die Belastbarkeit oder Tragfähigkeit des Bauteiles erhöhen.

Eine weitere Ausgestaltung der Erfindung kann darin bestehen, daß das zum Abschließen des ersten Teiles dienende zweite Teil zwischen dem oder den Auflagerändern profiliert ist(sind) und/oder an der Außen- und/oder Innenseite verlaufende, insbesondere einstückig mit ihm verbundene Rippen oder dergleichen Aussteifungen aufweist. Dadurch kann auch das zweite, aus Kunststoff bestehende Teil zusätzlich verstärkt werden, während das erste Teil bereits durch das Metallprofil und seine Querschnittsform eine hohe Belastbarkeit und Steifigkeit hat.

Wenigstens ein Teil der an dem zweiten Teil innenseitig und/oder außenseitig abstehenden Rippen kann quer zur Längserstreckung des Bauteiles, insbesondere rechtwinklig dazu angeordnet sein. Denkbar sind aber auch in Längsrichtung verlaufende Rippen. Quer angeordnete Rippen verbessern dabei den Widerstand auch des zweiten Teiles gegen ein Eindrücken beispielsweise bei nur stellenweiser Druck- oder Stoßbelastung, wie sie zum Beispiel auftreten kann, wenn das Bauteil Bestandteil eines Kraftfahrzeuges zum Beispiel an dessen Front- oder Heckpartie ist.

Die von dem zweiten Teil ausgehenden, in Gebrauchstellung im Querschnitt des Bauteiles angeordneten Rippen können eine geringere Höhe als der Innenquerschnitt des Bauteiles haben und in dem Bauteil in dessen Längserstreckungsrichtung einen Durchlaß freilassen. Dadurch ist es möglich, das einen Hohlquerschnitt aufweisende Bauteil nicht nur bei einer Ausführungsform ohne solche innenliegenden Rippen, sondern auch mit solchen Rippen zur Aufnahme von Kabeln oder Leitungen oder dergleichen Installationen auszunutzen, die gut geschützt im Inneren des Bauteiles verlaufen können.

Insbesondere für eine gute Kraftübertragung auch innerhalb des Bauteiles und dabei innerhalb seines ersten Teiles ist es vorteilhaft, wenn das Metallprofil des ersten Teiles wenigstens auf seiner der Kunststoffschicht zugewandten Seite Verformungen, insbesondere Vertiefungen, Vorsprünge, durchgehende Lochungen, Ausstanzungen und/oder Ausklinkungen aufweist, in die der Kunststoff seiner Kunststoffschicht zumindest teilweise eingreift oder durch die der Kunststoff auf die andere Seite des Metallprofiles übertritt. Dadurch kann die Verbindung der Kunststoffschicht mit dem Metallprofil oder Metallteil stellenweise formschlüssig verbunden werden, so daß dieser Verbund höheren Kräften gewachsen ist.

Der das Metallprofil durchsetzende Kunststoff kann dabei mit der der Kunststoffschicht abgewandten Oberfläche des Metallprofils bündig oder weitgehend bündig sein und/oder einen Vorsprung oder Wulst oder dergleichen bilden. Durch das Umspritzen des Metallteiles mit Kunststoff erfolgt aufgrund solcher Verformungen an dem Metallprofil also auch ein Formschluß vor allem in Längserstreckungsrichtung des Bauteiles, aber auch in Querrichtung, so daß auch bei unterschiedlichsten und sogar bei dynamischen Belastungen eine Trennung der Kunststoffschicht von dem Metallprofil vermieden werden kann. Weist das Metallprofil dabei auf der Seite der Kunststoffschicht Vorsprünge oder vorspringende Bereiche auf, werden diese beim Umspritzen mit dem Kunststoff in den Kunststoff eingebettet und haben einen vergleichbaren Effekt wie Vertiefungen oder Lochungen.

Der an einer Lochung oder einem Durchtritt des Metallprofiles durch den umspritzten Kunststoff gebildete Kunststoff-Fleck oder Vorsprung oder Wulst kann als Abstandhalter, Puffer oder Befestigungsstelle zum Montieren des Bauteiles oder Befestigen von Funktionsteilen an dem Bauteil vorgesehen sein. Somit erhalten die Lochungen in dem Metallprofil und der an dieser Stelle durchtretende Kunststoff eine Doppelfunktion, weil einerseits die Verbindung zwischen dem Metallprofil und der Kunststoffschicht kraftschlüssig gestaltet und damit verbessert wird, und weil außerdem der sich bildende Kunststoffwulst als Puffer oder Befestigungsstelle zur Verfügung steht. Wird beispielsweise in einen solchen Kunststoffvorsprung oder -wulst eine Befestigungsschraube eingedreht, bleibt der im Inneren des hohlen Bauteiles befindliche Hohlquerschnitt dennoch geschlossen, sofern dafür gesorgt wird, daß eine solche Befestigungsschraube nicht bis in das Innere dieses Querschnittes reicht.

Falls der durch eine Verformung des Metallprofiles durchtretende Kunststoff auf der der Kunststoffschicht abgewandten Seite des Metallprofiles mit diesem bündig ist, weil das Metallprofil im Bereich des Durchtrittes nach innen verformt ist, kann dieser so gebildete Kunststoff-Fleck gegebenenfalls ebenfalls zum Anschließen weiterer Befestigungselemente dienen oder aber ein flächiges Auflegen des Bauteiles trotz des durchtretenden Kunststoffes beispielsweise unter beengten Platzverhältnissen erlauben.

Eine weitere Ausgestaltung der Erfindung kann darin bestehen, daß das Metallprofil des ersten Teiles auf beiden Seiten mit einer Kunststoffschicht umspritzt ist und daß diese beiden Kunststoffschichten insbesondere durch eine oder mehrere Öffnungen in dem Metallprofil und/oder an dessen Rändern miteinander verbunden sind. Das Metallprofil wird bei einer solchen Ausführungsform also praktisch vollständig von Kunststoff umschlossen, was die Festigkeit und Belastbarkeit weiter erhöht und darüberhinaus das Metallprofil weitestgehend gegen Korrosion schützt.

Bei den verschiedenen denkbaren Ausführungsbeispielen des erfindungsgemäßen Bauteiles ist zweckmäßig, wenn das Metallprofil an seinen beiden Rändern mit ihren Querschnitten voneinander wegweisende Flansche aufweist, die mit der angespritzten Kunststoffschicht zumindest über einen Teil ihrer randnahen Breite überzogen sind, insbesondere vollständig mit der Kunststoffschicht bekleidet oder beschichtet sind. Somit steht ein entsprechend breiter Flansch oder Randbereich als Berührstelle zum Verbinden mit dem zweiten Teil des Bauteiles zur Verfügung, was wiederum die Steifigkeit und Belastbarkeit des Bauteiles und auch die Dichtigkeit des inneren Hohlraumes des Bauteiles erhöht.

Dabei kann das zweite Teil mit der Kunststoffschicht des ersten Teiles flüssigkeits- und/oder gasdicht verschweißt sein. Dies verbessert nicht nur die Festigkeit des Verbindung, sondern erlaubt es auch, das Bauteil zur Aufnahme oder zur Leitung von Flüssigkeiten zu nutzen. Beispielsweise könnte das Bauteil bei seiner Anwendung an oder in einem Kraftfahrzeug einen Spritzwassertank für Reinigungsflüssigkeit beispielsweise für die Windschutzscheibe bilden oder enthalten. Somit erhält das Bauteil eine zusätzliche Funktion und erlaubt es, den Platz für einen separaten Flüssigkeitsbehälter einzusparen.

Da das Metallprofil mit der Kunststoffschicht umspritzt ist - zumindest auf einer Seite - ist es möglich, daß sich der Querschnitt des Bauteiles in seiner Längserstreckungsrichtung ändert, beispielsweise vergrößert und/oder verkleinert, um eine Anpassung an unterschiedliche örtliche Gegebenheiten oder Belastungsformen zu erlauben. Beispielsweise könnte eine Querschnittserweiterung im Verlauf des Bauteiles zur Aufnahme von Flüssigkeit dienen oder eine Querschnittsverengung könnte eine räumliche Engstelle innerhalb eines Kraftfahrzeuges überbrücken.

Eine weitere Ausgestaltung des erfindungsgemäßen Bauteiles kann dabei darin bestehen, daß es in seiner Längserstreckungsrichtung wenigstens eine Richtungsänderung, beispielsweise eine winklige und/oder gekrümmte Form hat. Auch dies ist problemlos trotz des zweischichtigen Aufbaus möglich, weil die Kunststoffschicht nicht auf das Metallprofil kaschiert, sondern das Metallprofil mit dem Kunststoff umspritzt wird.

Für eine einfache Realisierung des Bauteiles und der Verwendung eines Kunststoffanteiles kann dabei der zur Beschichtung des Metallprofiles dienende Kunststoff und der als zweites Teil zum Abschluß des Hohlquerschnittes dienende Kunststoff jeweils spritzfähiger thermoplastischer Kunststoff, bevorzugt derselbe Kunststoff sein.

Bei einem besonders stark beanspruchten erfindungsgemäßen Bauteil kann eine weitere Ausgestaltung darin bestehen, daß der zweite Teil eine Metallarmierung, gegebenenfalls ein über wenigstens einen Teil seines Querschnitts verlaufendes Metallprofil, enthält. Es könnte also auch der zweite zur Bildung des Bauteiles dienende Teil ein Metallprofil aufweisen oder enthalten, welches in Kunststoff eingebettet oder mit Kunststoff zumindest einseitig umspritzt ist. Somit könnte auch bei dem zweiten Teil der Vorteil realisiert werden, daß die vorteilhaften Eigenschaften von Metall und Kunststoff gemeinsam nutzbar gemacht werden.

Insgesamt ergibt sich ein aus mehreren Werkstoffen bestehendes Bauteil, also ein Hybrid-Bauteil, bei welchem Metall und Kunststoff so kombiniert sind, daß die jeweiligen Eigenschaften dieser Werkstoffe ausgenutzt und gleichzeitig die Belastbarkeit des Bauteiles erhöht sind, dennoch aber die Herstellung relativ einfach und preiswert ist.

Nachstehend ist ein Ausführungsbeispiel der Erfindung anhand der Zeichnung näher beschrieben. Es zeigt in zum Teil schematisierter und schaubildlicher, gleichzeitig im Querschnitt gehaltener Darstellung:
- Fig.1: ein im Querschnitt U-förmiges Metallprofil, welches zu einem ersten Teil eines länglichen Bauteiles gehört, das aus zwei einzelnen Teilen zusammengesetzt ist,
- Fig.2: das Metallprofil gemäß Fig.1 nach dem Umspritzen mit einer Kunststoffschicht auf seiner Innenseite, wobei der sichtbare Querschnitt im Bereich einer bodenseitigen, nach innen hochgewölbten Anstanzung und Durchtritts-öffnung angeordnet ist,
- Fig.3: eine der Fig.2 entsprechende Darstellung, wobei der Querschnitt im Bereich von in den U-Schenkeln des Metallprofiles angeordneten Lochungen vorgesehen ist, an denen der die Kunststoffschicht bildenden angespritzte Kunststoff in Form eines Vorsprunges nach außen hindurch getreten ist,
- Fig.4: das zweite Teil des Bauteiles, welches aus Kunststoff besteht und im Bereich der Ränder und Flansche mit dem Kunststoff des ersten Bauteiles verschweißbar ist, wobei dieses zweite Teil zwischen seinen Flanschen eine flache konvexe Wölbung sowie sowohl innen- als auch außenseitig Versteifungsrippen aufweist,
- Fig.5: ein zusammengefügtes Bauteil mit Blick auf einen Querschnitt und die Unterseite des ersten Bauteiles,
- Fig.6: ein zusammengefügtes und verschweißtes Bauteil analog Fig.5 mit Blick auf einen Querschnitt und die Oberseite des zweiten Teiles,
- Fig.7: eine Ansicht eines Ausführungsbeispieles eines Bauteiles gemäß den Figuren 1 bis 6 mit bereichsweise unterschiedlichen Querschnitten und mit in seiner Längserstreckungsrichtung vorgesehenen Richtungs- änderungen sowie
- Fig.8: eine schaubildliche Darstellung eines erfindungsgemäßen Bauteiles oder eines Abschnittes davon, bei welchem der zweite Teil unterbrochen oder aus mehreren Stücken gebildet ist und die Kunststoffschicht des ersten Teiles Stellen geringerer Dicke beziehungsweise Unterbrechungen aufweist.

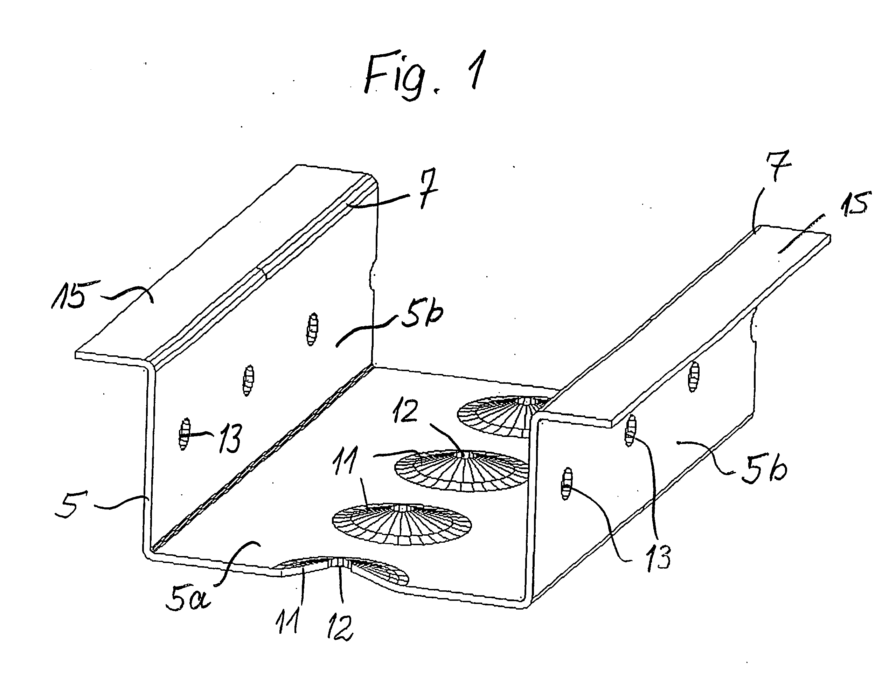

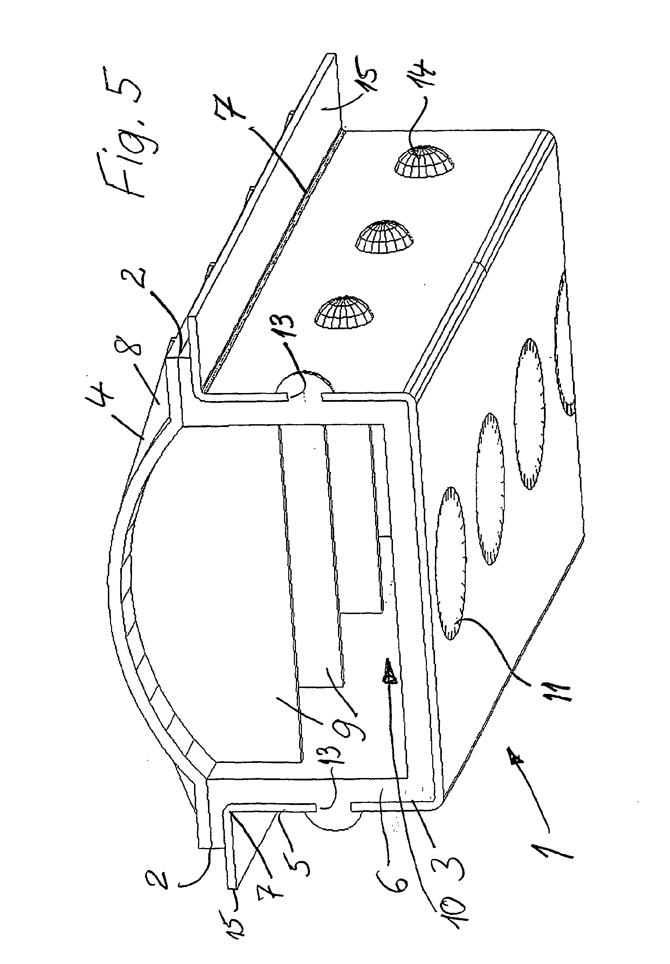

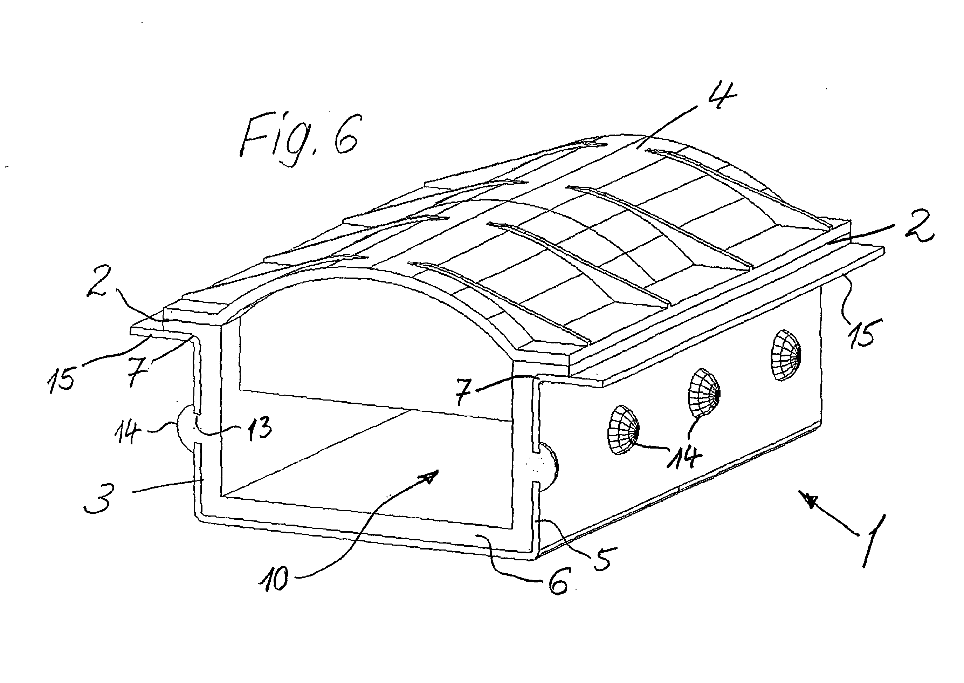

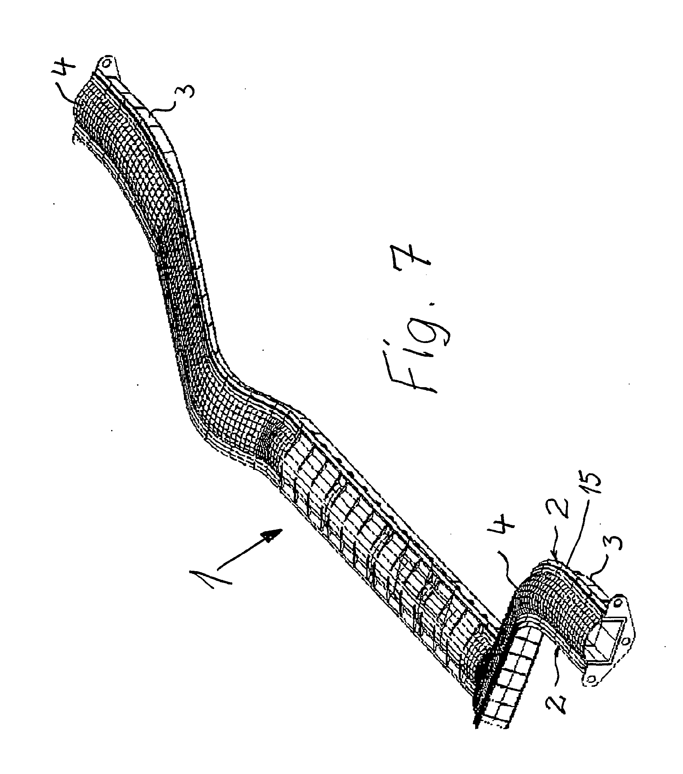

Ein in den Figuren 5 und 6 als Teilstück und in Fig. 7 als Beispiel einer möglichen Ausführungsform dargestelltes längliches Bauteil 1 hat, wie vor allem in den Figuren 5 und 6 deutlich erkennbar, einen geschlossenen, kanalförmigen Hohlquerschnitt und ist gemäß den Figuren 1 bis 4 in noch zu beschreibender Weise aus zwei einzelnen Teilen zusammengefügt und zusammengesetzt, die jeweils zwei in Längserstreckungsrichtung verlaufende Berührstellen 2 (vgl. Fig.5 und 6) miteinander haben. Dabei ist ein erstes Teil 3 mit einem U- oder rinnenförmigen Querschnitt vorgesehen und mit dem zweiten Teil 4 zum Schließen des Hohlquerschnittes gemäß den Fig.5 und 6 in Gebrauchstellung verbunden.

Das erste Teil ist dabei gemäß Fig.1 bis 3 ein Metallprofil 5, das auf wenigstens einer Seite mit einer das Widerstandsmoment erhöhenden Kunststoffschicht 6 umspritzt oder hinterspritzt ist, die bis zu den Rändern 7 des ersten Teiles 3 reicht und gegebenenfalls dieses Ränder 7 sogar selbst bilden könnte.

Das erste Teil 3 hat auf diese Weise an den Rändern 7 eine Anlagestelle für das zweite Teil 4, die über die Länge des Bauteiles 1 verläuft.

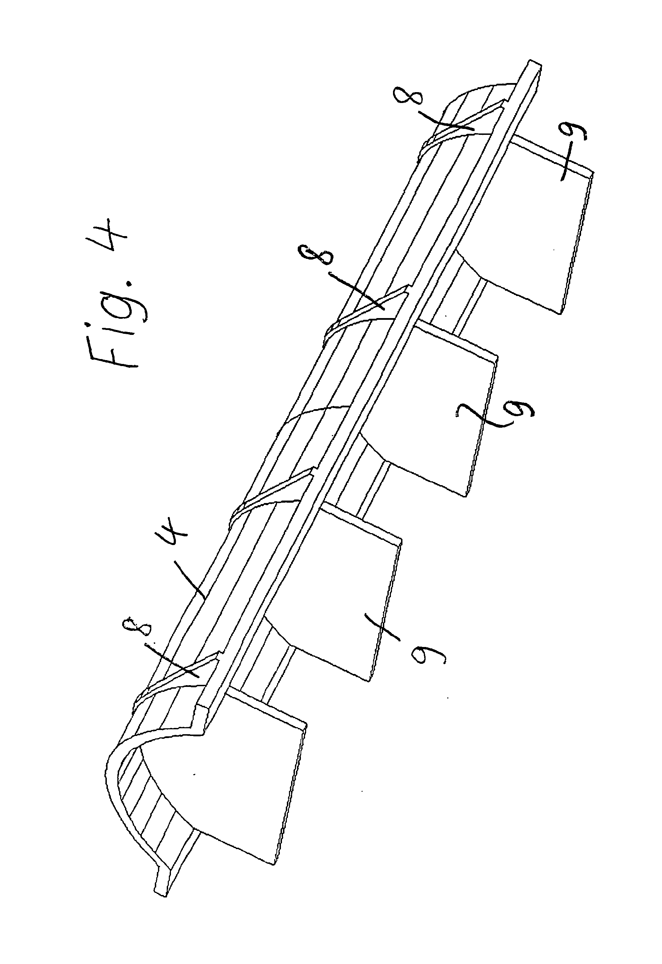

Das in Fig.4 dargestellte zweite Teil 4 des Bauteiles 1 besteht aus Kunststoff und ist in der in den Fig. 5 und 6 dargestellten Gebrauchsstellung mit der Kunststoffschicht 6 des ersten Teiles 3 an den Anlagestellen an den Rändern 7 verschweißt.

Der zur Beschichtung des Metallprofiles 5 dienende Kunststoff und der als zweites Teil 4 zum Abschluß des Hohlprofiles dienende Kunststoff ist also jeweils spritzfähiger thermoplastischer Kunststoff, der eine gegenseitige Verschweißung ermöglicht.

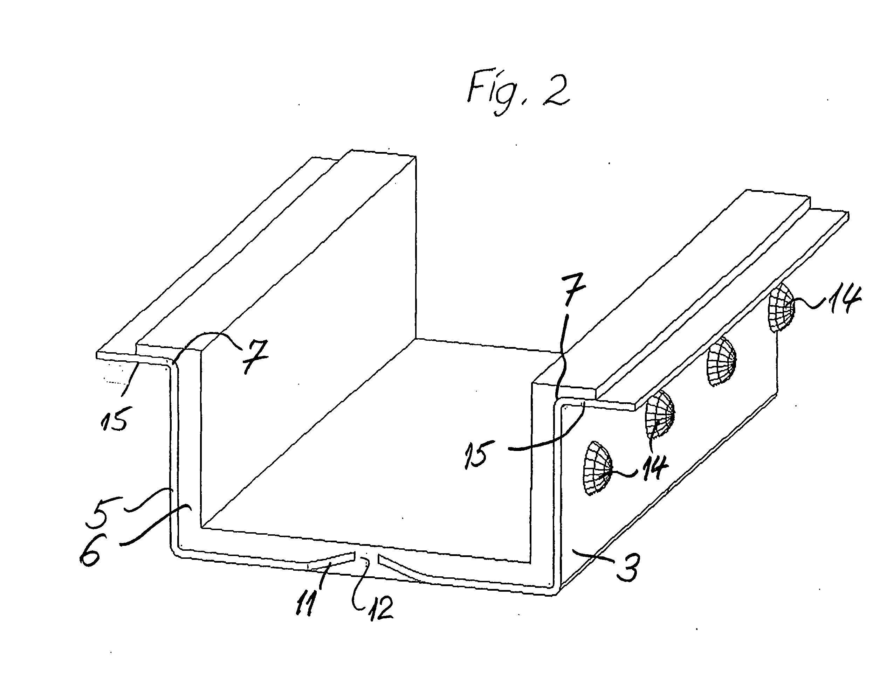

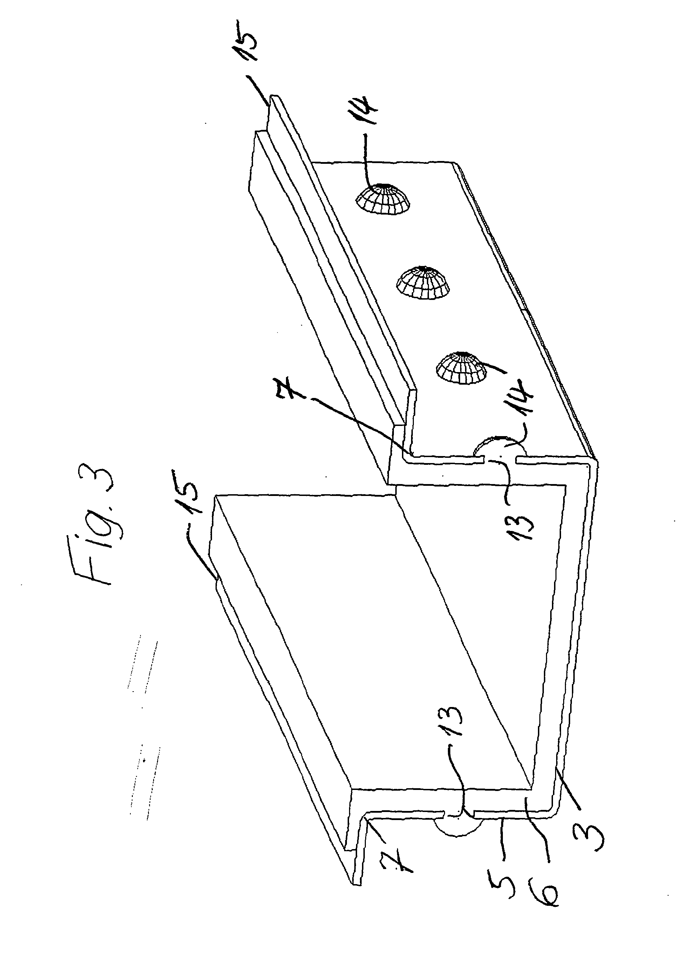

Im Ausführungsbeispiel hat das Metallprofil 5 einen U-förmigen Querschnitt und die durch Umspritzen oder Aufspritzen damit verbundende Kunststoffschicht 6 ist an der Innenseite des U-Querschnittes angeordnet und verläuft bis auf die Außenseite der Ränder 7, was besonders deutlich in den Fig. 2 und 3 erkennbar ist und die Verbindung der beiden Teile 3 und 4 miteinander durch Schweißen erleichtert.

Das zweite Teil 4 ist im Ausführungsbeispiel eine flache, jedoch leicht konvex gewölbte Platte aus Kunststoff, die über die beiden Ränder 7 des ersten Teiles 3 reicht, um dort damit gemäß Fig.5 und 6 verbunden zu werden. Die konvexe flache Wölbung verstärkt dabei die Steifigkeit dieses als Deckel wirkenden zweiten Teiles 4.

Dabei ist vor allem in Fig.4 dargestellt, daß dieses zum Abschließen des U- oder rinnenförmig profilierten ersten Teiles 3 dienende zweite Teil 4 zwischen den Auflagerändern einstückig mit ihm verbundene Rippen 8 außenseitig und 9 innenseitig trägt, wodurch dieses zweite Teil 4 zusätzlich ausgesteift und vor allem gegen nur stellenweise auftretende Querkräfte oder Stöße verstärkt werden kann. Dabei sind diese innenseitig und außenseitig abstehenden Rippen 8 und 9 quer zur Längserstreckung des Bauteiles 1 und zwar rechtwinklig dazu angeordnet.

In den Fig.5 und 6 wird verdeutlicht, daß die von dem zweiten Teil 4 innenseitig ausgehenden, in Gebrauchsstellung im Querschnitt des Bauteiles 1 angeordneten Rippen 9 eine geringere Höhe als der Innenquerschnitt des Bauteiles 1 haben und im Bauteil in dessen Längserstreckungsrichtung also einen Durchlaß 10 beispielsweise für dort untergebrachte Einbauten wie Kabel, Leitungen oder dergleichen freilassen. Diese Rippen 8 können aber auch völlig entfallen, wenn der gesamte Innenquerschnitt als Durchlaß 10 oder Aufnahmeraum für Einbauteile oder gegebenenfalls als Behälter für Flüssigkeiten oder dergleichen benötigt wird. Aber auch bei der Verwendung des Innenraumes als Flüssigkeitsbehälter könnten die Rippen 8 vorhanden sein und dazu beitragen, daß eine gespeicherte Flüssigkeit insbesondere nach einer teilweisen Entleerung unter dynamischer Beanspruchung an einer zu starken Geräuschbildung gehindert wird.

Es sei an dieser Stelle erwähnt, daß das zweite Teil 4 mit der Kunststoffschicht 6 des ersten Teiles 3 flüssigkeits- und/oder gasdicht verschweißt sein kann, so daß der Innenraum oder Durchlaß 10 als Flüssigkeitsbehälter genutzt werden kann. Beispielsweise kann das Bauteil 1 an einem Kraftfahrzeug im Front- oder gegebenenfalls auch im Heckbereich zum Beispiel als Träger oder Verbinder dienen und dann gegebenenfalls auch den Flüssigkeitstank für Reinigungsflüssigkeit für Windschutzscheiben, Scheinwerfer oder dergleichen bilden.

Das Metallprofil 5 des ersten Teiles 3 hat gemäß Fig.1 auf seiner der Kunststoffschicht 6 zugewandten Seite Verformungen, wobei im Bereich seines Bodens 5a Ausklinkungen 11 mit einer zentralen durchgehenden Lochung 12 in Reihe nebeneinander angeordnet sind, die an der Außen- oder Unterseite dieses Bodens 5a eine Vertiefung bilden. In den Seitenwänden oder U-Schenkeln 5b sind hingegen durchgehende Lochungen oder Bohrungen 13 vorgesehen. Man erkennt in den Fig.2 und 3, wie der Kunststoff der Kunststoffschicht 6 nach dem Umspritzen des Metallprofiles 5 diese Verformungen ausfüllt und durchdringt. Die Vertiefungen der Ausklinkungen 11 sind dabei gemäß Fig.2 bis 6 von diesem Kunststoff ausgefüllt, während im Bereich der Lochungen 13 der Kunststoff auf der Außenseite jeweils einen Vorsprung 14 oder Wulst bildet. Dieser kann als Abstandhalter, Puffer oder als Befestigungsstelle zum Montieren des Bauteiles 1 oder zum Befestigen von Funktionsteilen an dem Bauteil 1 dienen, wobei beispielsweise Schrauben in einen solchen Vorsprung 14 eingeschraubt werden können, ohne die Kunststoffschicht 6 zu durchstoßen, so daß die Dichtigkeit des Durchlasses10beziehungsweisedeskanalförmigenHohlquerschnittes erhalten bleibt.

Gegebenenfalls könnten auch beide Seiten des Metallprofiles 5 mit jeweils einer Kunststoffschicht umspritzt sein, die dann an den Öffnungen 12 und Lochungen 13 gegenseitig verbunden sind.

In den Zeichnungen erkennt man deutlich, daß das Metallprofil 5 an seinen beiden Rändern 7 voneinander wegweisende Flansche 15 aufweist, die mit der angespritzten Kunststoffschicht 6 über einen Teil ihrer dem Rand 7 nahen Breite überzogen sind. Zwar könnten sie auch vollständig mit der Kunststoffschicht bekleidet sein, jedoch ist gemäß den Fig.2 bis 6 im Ausführungsbeispiel vorgesehen, daß die freien Ränder der Flansche 15 des Metallprofiles 5 gegenüber der Kunststoffschicht 6 überstehen, so daß dort die Möglichkeit besteht, weitere Teile, Profile oder dergleichen unmittelbar an dem Metallprofil 5 anzuschließen oder das Bauteil 1 an diesen von Kunststoff freien Bereichen der Flansche 15 zu befestigen.

In Fig.7 ist dargestellt, daß ein Ausführungsbeispiel des Bauteiles 1 einen sich in Längserstreckungsrichtung ändernden Querschnitt haben kann, das heißt sein Querschnitt kann sich in seinem Verlauf vergrößern und/oder verkleinern. Dies ist ohne weiteres möglich, wenn das Metallprofil 5 entsprechend geformt und gebogen ist, weil die Kunststoffschicht 6 nicht darauf kaschiert, sondern aufgespritzt wird und sich somit entsprechenden Formen des Metallprofiles 5 automatisch anpassen läßt.

Ferner erkennt man, daß das Bauteil 1 in seiner Längserstreckungsrichtung auch Richtungsänderungen, also einen winkligen oder gekrümmten Verlauf haben kann, obwohl es aus unterschiedlichen Werkstoffen zusammengefügt ist, was wiederum durch die Umspritzung des Metallprofiles 5 mit der Kunststoffschicht 6 und deren Verschweißung mit dem zweiten Teil 4 des Bauteiles 1 begünstigt wird.

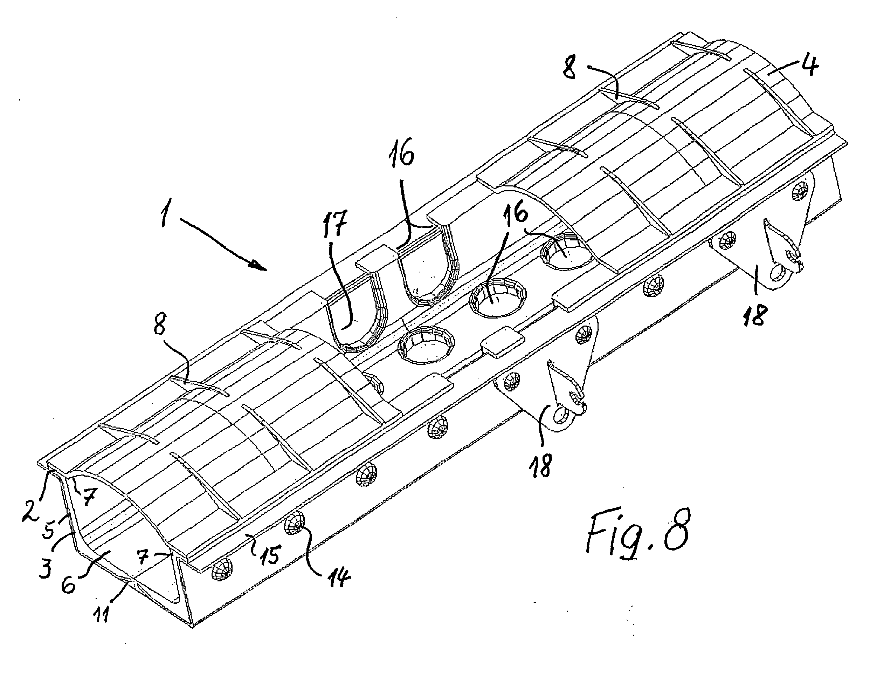

Figur 8 zeigt ebenfalls ein längliches Bauteil 1 oder ein Teilstück davon, d.h. ein gemäß Fig. 8 gestaltetes Bauteil 1 könnte sich auch nach einer oder beiden Seiten weiter fortsetzen.

Gegenüber den vorstehend beschriebenen Merkmalen und Einzelheiten des Bauteiles 1 erkennt man in Fig.8, daß die auf das erste Teil 3 beziehungsweise das Metallprofil 5 aufgespritzte Kunststoffschicht 6 in ihrem Verlauf Unterbrechungen 16 oder Stellen 17 mit verminderter Dicke aufweisen kann. Die Kunststoffschicht 6 kann also in ihrem Verlauf unterschiedliche Dicken und/oder die schon erwähnten Unterbrechungen 16 haben, um eine Anpassung an Anschlüsse oder bestimmte Belastungsanforderungen zu erlauben. Dabei wird deutlich, daß solche Unterbrechungen 16 auch auf den Flanschen 15 vorgesehen sein können.

Das zweite Teil 4 ist in diesem Ausführungsbeispiel ebenfalls unterbrochen, also mehrteilig ausgebildet. Dadurch ist der Blick auf das Innere des Bauteiles 1 in Fig.8 freigegeben. Selbstverständlich wäre aber auch möglich, das zweite Teil 4 aus einem durchgehenden Stück wie in den vorbeschriebenen Figuren dargestellt herzustellen oder an der in Fig.8 offenen Stelle ein diese offene Stelle schließendes weiteres Stück des zweiten Teiles 4 einzufügen.

Ferner erkennt man in Figur 8 nur an der Außenseite des zweiten Teiles 4 Rippen 8.

Ferner ist in Fig.8 dargestellt, wie einzelne der außen an dem Metallprofil 5 überstehenden Wülste oder Vorsprünge 14 zum Befestigungen von weiteren Funktionsteilen 18 an dem Bauteil an ausgenutzt werden können. Dabei können diese Funktionsteile 18 gleich durch den den Vorsprung 14 bildenden Kunststoff beim Umspritzen miterfasst oder nachträglich darauf aufgeclipst und angeklebt oder gegebenenfalls auch angeschraubt werden.

Es sei noch erwähnt, daß im Ausführungsbeispiel ein längliches Bauteil 1 dargestellt und in unterschiedlichen Varianten beschrieben ist, bei welchem ein erstes Teil 3 ein im wesentlichen U- oder rinnenförmiges Profil hat. Es wäre aber auch möglich, daß dieses erste Teil ein konkav gewölbtes oder schüsselförmiges Teil, jedenfalls ein Teil mit einem umlaufenden oder in sich zurückkehrenden Rand ist, das mit einem zweiten Teil 4 entsprechend abgeschlossen wird. Auch dabei könnte dann das erste Teil 3 ein Metallprofil 5 entsprechender Formgebung aufweisen, das zumindest einseitig mit einer Kunststoffschicht 6 umspritzt ist und hinsichtlich weiterer Ausgestaltungen dem in den Fig.1 bis 8 dargestellten Bauteil entspricht.

Das insbesondere längliche Bauteil 1 hat einen geschlossenen, etwa kanalförmigen Hohlquerschnitt, so daß es hohe Kräfte in unterschiedlichen Richtungen aufnehmen kann und sich gut als Träger eignet. Es ist aus zwei einzelnen Teilen 3 und 4 zusammengesetzt, die zwei in Längserstreckungsrichtung verlaufende Berührstellen 2 miteinander haben. Dabei hat wenigstens ein erstes Teil 3 dieser beiden Teile einen U- oder rinnenförmigen Querschnitt und ist mit dem zweiten, es deckelartig abschließenden Teil 4 in Gebrauchsstellung verbunden. Das erste Teil 3 ist ein Metallprofil 5, das auf wenigstens einer Seite mit einer das Widerstandsmoment erhöhenden Kunststoffschicht 6 umspritzt, also mehrschichtig ist, wobei diese Kunststoffschicht 6 bis zu den Rändern 7 des ersten Teiles 3 reicht und dort eine Anlagestelle für das zweite Teil 4 bildet. Das zweite Teil 4 besteht aus Kunststoff, der in Gebrauchsstellung mit der Kunststoffschicht 6 an den Berührstellen verschweißt ist. Somit ergibt sich ein steifes Bauteil 1 mit einem Hohlquerschnitt, bei welchem die Vorteile von Metall und Kunststoff gemeinsam genutzt werden.

## Patentansprüche

1. Bauteil (1) mit einem wenigstens teilweise geschlossenen Hohlquerschnitt, welches aus zwei einzelnen Teilen zusammengesetzt ist, die zumindest eine linienförmige oder flächige Berührstelle (2) miteinander haben, wobei wenigstens ein erster Teil (3) einen konkaven Querschnitt hat und mit dem zweiten Teil (4) in Gebrauchsstellung verbunden ist, **dadurch gekennzeichnet, daß** wenigstens das erste Teil (3) ein Metallprofil (5) ist, das auf wenigstens einer Seite zumindest bereichsweise mit einer das Widerstandsmoment erhöhenden Kunststoffschicht umspritzt ist oder auf das auf wenigstens einer Seite zumindest bereichsweise eine das Widerstandsmoment erhöhenden Kunststoffschicht (6) aufgespritzt ist, wobei die Kunststoffschicht (6) bis zu dem umlaufenden Rand oder den nebeneinander oder parallel laufenden Rändern (7) des ersten Teiles (3) reicht und/oder den oder die Ränder (7) bildet und dort eine Anlagestelle für das zweite Teil (4) aufweist, und daß das zweite Teil (4) aus Kunststoff besteht, der in Gebrauchsstellung mit der Kunststoffschicht (6) des ersten Teiles (3) verschweißt ist.

2. Bauteil nach Anspruch 1, **dadurch gekennzeichnet, daß** die Kunststoffschicht (6) des ersten Teiles (3) in ihrem Verlauf unterschiedliche Dicken und/oder Unterbrechungen (16) aufweist.

3. Bauteil nach Anspruch 1 oder 2, **dadurch gekennzeichnet, daß** mit der durch Umspritzen angebrachten oder aufgespritzten Kunststoffschicht (6) Teile oder Elemente, beispielsweise Befestigungselemente, Kabelkanäle oder dergleichen einstückig verbunden und/oder mitangespritzt sind.

4. Bauteil nach einem der Ansprüche 1 bis 3, **dadurch gekennzeichnet, daß** das Metallprofil (5) und damit das erste Teil (3) einen U-förmigen oder rinnenförmigen Querschnitt hat und die Kunststoffschicht (6) an der Innenseite des U-Quer-schnittes angeordnet ist und bis zu den Rändern (7) oder bis auf die Außenseite der Ränder (7) verläuft.

5. Bauteil nach einem der Ansprüche 1 bis 4, **dadurch gekennzeichnet, daß** das zweite Teil (4) in seinem Verlauf Durchbrüche aufweist oder unterbrochen und/oder mehrteilig ausgebildet ist.

6. Bauteil nach einem der Ansprüche 1 bis 5, **dadurch gekennzeichnet, daß** das zweite Teil (4) aus einer oder mehreren flachen oder zumindest bereichsweise konvexen oder gewölbten Platte(n) aus Kunststoff gebildet ist, die über den Rand oder die Ränder (7) des ersten konkaven Teiles, insbesondere des U- oder rinnenförmig profilierten Teiles (3) reicht (reichen) .

7. Bauteil nach einem der Ansprüche 1 bis 6, **dadurch gekennzeichnet, daß** das zum Abschließen des ersten Teiles (3) dienende zweite Teil oder die zum Abschließen des ersten Teiles (3) dienenden zweiten Teile zwischen dem oder den Auflagerändern profiliert ist oder sind und/oder an der Außen- und/oder Innenseite verlaufende, insbesondere einstückig verbundene Rippen (8, 9) oder Aussteifungen aufweist oder aufweisen.

8. Bauteil nach einem der Ansprüche 1 bis 7, **dadurch gekennzeichnet, daß** wenigstens ein Teil der an dem zweiten Teil (4) innenseitig und/oder außenseitig abstehenden Rippen (8, 9) quer zur Längserstreckung des Bauteiles (1) insbesondere rechtwinklig dazu angeordnet ist.

9. Bauteil nach Anspruch 7 oder 8, **dadurch gekennzeichnet, daß** die von dem zweiten Teil (4) ausgehenden, in Gebrauchsstellung im Querschnitt des Bauteiles (1) angeordneten Rippen (8) eine geringere Höhe als der Innenquerschnitt des Bauteiles (1) haben und in dem Bauteil in dessen Längserstreckungsrichtung einen Durchlaß (10) freilassen.

10. Bauteil nach einem der Ansprüche 1 bis 9, **dadurch gekennzeichnet, daß** das Metallprofil (5) des ersten Teils (3) wenigstens auf seiner der Kunststoffschicht (6) zugewandten Seite Verformungen, insbesondere Vertiefungen, Vorsprünge, durchgehende Lochungen, Ausstanzungen und/oder Ausklinkungen (11) aufweist, in die der Kunststoff seiner Kunststoffschicht zumindest teilweise eingreift oder durch die der Kunststoff auf die andere Seite des Metallprofiles übertritt.

11. Bauteil nach Anspruch 10, **dadurch gekennzeichnet, daß** der das Metallprofil (5) durchsetzende Kunststoff mit der der Kunststoffschicht (6) abgewandten Oberfläche des Metallprofils (5) bündig oder weitgehend bündig ist und/oder einen Vorsprung (14) oder Wulst bildet.

12. Bauteil nach Anspruch 11, **dadurch gekennzeichnet, daß** der Vorsprung (14) oder Wulst als Abstandhalter, Puffer oder Befestigungsstelle zum Montieren des Bauteiles (1) oder zum Befestigen von Funktionsteilen (18) an dem Bauteil (1) vorgesehen ist.

13. Bauteil nach einem der Ansprüche 1 bis 12, **dadurch gekennzeichnet, daß** das Metallprofil (5) des ersten Teiles (3) auf beiden Seiten mit einer Kunststoffschicht (6) umspritzt ist und daß diese beiden Kunststoffschichten (6) insbesondere durch eine oder mehrere Öffnungen in dem Metallprofil (5) und/oder an dessen Rändern miteinander verbunden sind.

14. Bauteil nach einem der Ansprüche 1 bis 13, **dadurch gekennzeichnet, daß** das Metallprofil (5) an seinen beiden Rändern (7) mit ihren Querschnitten voneinander wegweisende Flansche (15) aufweist, die mit der angspritzten Kunststoffschicht (6) zumindest über einen Teil ihrer randnahen Breite überzogen sind.

15. Bauteil nach einem der Ansprüche 1 bis 14, **dadurch gekennzeichnet, daß** der freie Rand oder die freien Ränder der Flansche (15) des Metallprofiles (5) gegenüber der Kunststoffschicht (6) zumindest bereichsweise seitlich überstehen.

16. Bauteil nach einem der Ansprüche 1 bis 15, **dadurch gekennzeichnet, daß** das zweite Teil (4) mit der Kunststoffschicht (6) des ersten Teiles (3) flüssigkeits- und/oder gasdicht verschweißt ist.

17. Bauteil nach einem der Ansprüche 1 bis 16, **dadurch gekennzeichnet, daß** sich sein Querschnitt in seiner Längserstreckungsrichtung ändert, beispielsweise vergrößert und/oder verkleinert.

18. Bauteil nach einem der Ansprüche 1 bis 17, **dadurch gekennzeichnet, daß** es in seiner Längserstreckungsrichtung wenigstens eine Richtungsänderung, beispielsweise eine winklige und/oder gekrümmte Form hat.

19. Bauteil nach einem der Ansprüche 1 bis 18, **dadurch gekennzeichnet, daß** der zur Beschichtung des Metallprofiles (5) dienende Kunststoff und der als zweites Teil (4) zum Abschluß des Hohlquerschnittes dienende Kunststoff spritzfähiger thermoplastischer Kunststoff ist.

20. Bauteil nach einem der vorstehenden Ansprüche, **dadurch gekennzeichnet, daß** der zweite Teil (4) eine Metallarmierung, gegebenenfalls ein über wenigstens einen Teil seines Querschnittes verlaufendes Metallprofil, enthält.

## Claims

1. Component (1) with an at least partially closed hollow cross-section which is made up of two individual parts that have at least one line or area of contact (2), wherein at least a first part (3) has a concave cross-section and is connected to the second part (4) in the position of use, **characterised in that** at least the first part (3) is a metal profile (5) which is extrusion-coated on at least one side, at least in parts, with a layer of plastics that increases the resisting torque or onto which a layer of plastics (6) that increases the resisting torque is sprayed on at least one side, at least in parts, wherein the plastics layer (6) extends up to the encircling edge or the adjacent or parallel running edges (7) of the first part (3) and/or forms the edge or edges (7) and comprises **in that** region a point of abutment for the second part (4), and **in that** the second part (4) consists of plastic which is welded to the plastics layer (6) of the first part (3) in the position of use.

2. Component according to claim 1, **characterised in that** the plastics layer (6) of the first part (3) has different thicknesses and/or interruptions (16) along its course.

3. Component according to claim 1 or 2, **characterised in that** parts or elements, for example fixing elements, cable channels or the like are attached in one piece and/or formed simultaneously with the plastics layer (6) applied by extrusion-coating or spraying.

4. Component according to one of claims 1 to 3, **characterised in that** the metal profile (5) and hence the first part (3) has a U-shaped or channel-shaped cross-section and the plastics layer (6) is arranged on the inside of the U-shaped cross-section and extends up to the edges (7) or up to the outside of the edges (7).

5. Component according to one of claims 1 to 4, **characterised in that** the second part (4) has gaps along its course or is interrupted and/or sectional in construction.

6. Component according to one of claims 1 to 5, **characterised in that** the second part (4) is formed from one or more flat or at least partially convex or domed sheet(s) of plastic which extend(s) over the edge or edges (7) of the first concave part, particularly the part (3) which has a U-shaped or channel-shaped cross-section.

7. Component according to one of claims 1 to 6, **characterised in that** the second part serving to close off the first part (3), or the second parts serving to close off the first part (3), is or are profiled between the contact edge or edges and/or comprise(s) ribs (8, 9) or stiffeners extending over the outside and/or inside, more particularly integrally attached thereto.

8. Component according to one of claims 1 to 7, **characterised in that** at least a part of the ribs (8, 9) protruding from the inside and/or outside of the second part (4) is arranged transversely with respect to the longitudinal extent of the component (1), more particularly at right-angles thereto.

9. Component according to claim 7 or 8, **characterised in that** the ribs (8) proceeding from the second part (4) and arranged in the cross-section of the component (1) in the position of use are lower in height than the internal cross-section of the component (1) and leave an opening (10) free in the component in the longitudinal direction thereof.

10. Component according to one of claims 1 to 9, **characterised in that** the metal profile (5) of the first part (3) has deformations, particularly depressions, projections, through-holes, cut-outs and/or notches (11), at least on its side facing the plastics layer (6), into which the plastics of the plastics layer engages at least partially or through which the plastics passes to the other side of the metal profile.

11. Component according to claim 10, **characterised in that** the plastics passing through the metal profile (5) is flush or substantially flush with the surface of the metal profile (5) remote from the plastics layer (6) and/or forms a projection (14) or bead.

12. Component according to claim 11, **characterised in that** the projection (14) or bead is provided as a spacer, buffer or point of attachment for assembling the component (1) or for attaching functional parts (18) to the component (1).

13. Component according to one of claims 1 to 12, **characterised in that** the metal profile (5) of the first part (3) is extrusion-coated on both sides with a plastics layer (6) and **in that** these two plastics layers (6) are joined together in particular through one or more openings in the metal profile (5) and/or at the edges thereof.

14. Component according to one of claims 1 to 13, **characterised in that** the metal profile (5) comprises, on both its edges (7), flanges (15) facing away from one another with their cross-sections, which are coated with the extruded plastics layer (6) at least over part of their width close to the edge.

15. Component according to one of claims 1 to 14, **characterised in that** the free edge or the free edges of the flanges (15) of the metal profile (5) at least partially project laterally relative to the plastics layer (6).

16. Component according to one of claims 1 to 15, **characterised in that** the second part (4) is welded in fluidtight and/or gastight manner to the plastics layer (6) of the first part (3).

17. Component according to one of claims 1 to 16, **characterised in that** its cross-section varies in its longitudinal direction, for example increases and/or decreases.

18. Component according to one of claims 1 to 17, **characterised in that** in its longitudinal direction it has at least one change of direction, for example an angled and/or curved shape.

19. Component according to one of claims 1 to 18, **characterised in that** the plastic used for coating the metal profile (5) and the plastic used as the second part (4) for closing off the hollow cross-section is an injectable thermoplastic plastic.

20. Component according to one of the preceding claims, **characterised in that** the second part (4) contains a metal reinforcement, optionally a metal profile extending over at least part of its cross-section.

## Revendications

1. Elément structurel (1) de section transversale creuse au moins partiellement fermée, composé de deux parties individuelles présentant au moins une zone (2) de contact mutuel linéaire ou superficiel, au moins une première partie (3) offrant une section transversale concave, et étant reliée à la seconde partie (4) en position d'utilisation, **caractérisé par le fait qu'**au moins la première partie (3) est un profilé métallique (5) enrobé par injection sur au moins une face, au moins par zones, d'une couche de matière plastique accroissant le couple de résistance, ou sur lequel une couche de matière plastique (6), accroissant le couple de résistance, est déposée par injection sur au moins une face, au moins par zones, sachant que ladite couche de matière plastique (6) s'étend jusqu'au bord périphérique, voire jusqu'aux bords (7) juxtaposés ou parallèles de ladite première partie (3), et/ou matérialise ledit ou lesdits bord(s) (7) et comporte, dans cette région, une zone d'appui destinée à la seconde partie (4) ; et **par le fait que** ladite seconde partie (4) est constituée d'une matière plastique soudée, en position d'utilisation, à la couche de matière plastique (6) de ladite première partie (3).

2. Elément structurel selon la revendication 1, **caractérisé par le fait que** la couche de matière plastique (6) de la première partie (3) présente, sur son tracé, des épaisseurs et/ou des discontinuités (16) différentes.

3. Elément structurel selon la revendication 1 ou 2, **caractérisé par le fait que** des pièces ou éléments, par exemple des éléments de fixation, des canaux de câblage ou éléments similaires, sont relié(e)s d'un seul tenant à la couche de matière plastique (6) déposée par injection ou venue d'enrobage injecté, et/ou sont injecté(e)s conjointement à ladite couche.

4. Elément structurel selon l'une des revendications 1 à 3, **caractérisé par le fait que** le profilé métallique (5), et donc la première partie (3), possèdent une section transversale de configuration en U ou en rigole, et la couche de matière plastique (6) se trouve sur la face intérieure de ladite section transversale en U et s'étend jusqu'aux bords (7), ou jusqu'à la face extérieure desdits bords (7).

5. Elément structurel selon l'une des revendications 1 à 4, **caractérisé par le fait que** la seconde partie (4) comporte des perforations sur son tracé, ou présente une réalisation discontinue et/ou en plusieurs pièces.

6. Elément structurel selon l'une des revendications 1 à 5, **caractérisé par le fait que** la seconde partie (4) est constituée d'une ou plusieurs plaque(s) en matière plastique de forme aplatie, voire convexe ou bombée au moins par zones, qui s'étend(ent) au-dessus du bord ou des bords (7) de la première partie concave, notamment de la partie (3) à profilage en U ou en rigole.

7. Elément structurel selon l'une des revendications 1 à 6, **caractérisé par le fait que** la seconde partie servant à la fermeture de la première partie (3), ou les secondes parties servant à la fermeture de ladite première partie (3), est (sont) profilée(s) entre le ou les bord(s) d'appui, et/ou comporte(nt) des nervures (8, 9) ou des pièces de renforcement notamment reliées d'un seul tenant, qui s'étendent sur la (les) face(s) extérieure et/ou intérieure.

8. Elément structurel selon l'une des revendications 1 à 7, **caractérisé par le fait qu'**au moins une part des nervures (8, 9), faisant saillie intérieurement et/ou extérieurement au-delà de la seconde partie (4), est disposée transversalement par rapport à l'étendue longitudinale dudit élément structurel (1), avec laquelle elle décrit notamment un angle droit.

9. Elément structurel selon la revendication 7 ou 8, **caractérisé par le fait que** les nervures (8), partant de la seconde partie (4) et situées dans la section transversale dudit élément structurel (1) en position d'utilisation, présentent une hauteur moindre que celle de la section transversale intérieure dudit élément structurel (1) et réservent un passage (10) dans ledit élément structurel, dans la direction de l'étendue longitudinale de ce dernier.

10. Elément structurel selon l'une des revendications 1 à 9, **caractérisé par le fait que** le profilé métallique (5) de la première partie (3) comporte, au moins sur sa face pointant vers la couche de matière plastique (6), des déformations se présentant notamment comme des creusures, des protubérances, des perçages traversants, des découpes matricées et/ou des encoches (11) dans lesquel(le)s la matière synthétique de sa couche de matière plastique pénètre au moins partiellement, ou à travers lesquel(le)s ladite matière synthétique déborde vers l'autre face dudit profilé métallique.

11. Elément structurel selon la revendication 10, **caractérisé par le fait que** la matière synthétique, traversant le profilé métallique (5), se trouve dans l'affleurement ou majoritairement dans l'affleurement de la surface dudit profilé métallique (5) qui est tournée à l'opposé de la couche de matière plastique (6), et/ou forme une protubérance (14) ou un bourrelet.

12. Elément structurel selon la revendication 11, **caractérisé par le fait que** la protubérance (14) ou le bourrelet est prévu(e) en tant qu'organe d'espacement, tampon ou zone de fixation en vue du montage dudit élément structurel (1), ou de la fixation de pièces fonctionnelles (18) audit élément structurel (1).

13. Elément structurel selon l'une des revendications 1 à 12, **caractérisé par le fait que** le profilé métallique (5) de la première partie (3) est enrobé d'une couche de matière plastique (6) sur les deux faces, par injection ; et **par le fait que** ces deux couches de matière plastique (6) sont notamment reliées l'une à l'autre par l'intermédiaire d'un ou plusieurs orifice(s) pratiqué(s) dans ledit profilé métallique (5), et/ou sur les bords de celui-ci.

14. Elément structurel selon l'une des revendications 1 à 13, **caractérisé par le fait que** le profilé métallique (5) offre, sur ses deux bords (7), des ailes (15) se détournant mutuellement par leurs sections transversales et revêtues, au moins sur une partie de leur largeur proche desdits bords, par la couche de matière plastique (6) rapportée par injection.

15. Elément structurel selon l'une des revendications 1 à 14, **caractérisé par le fait que** le bord libre ou les bords libres des ailes (15) du profilé métallique (5) dépasse(nt) latéralement, au moins par zones, vis-à-vis de la couche de matière plastique (6).

16. Elément structurel selon l'une des revendications 1 à 15, **caractérisé par le fait que** la seconde partie (4) est soudée à la couche de matière plastique (6) de la première partie (3), avec étanchéité aux liquides et/ou aux gaz.

17. Elément structurel selon l'une des revendications 1 à 16, **caractérisé par le fait que** sa section transversale varie dans la direction de son étendue longitudinale, par exemple en augmentant et/ou en diminuant.

18. Elément structurel selon l'une des revendications 1 à 17, **caractérisé par le fait qu'**il présente au moins une variation directionnelle dans la direction de son étendue longitudinale en offrant, par exemple, une forme décrivant un angle et/ou une courbe.

19. Elément structurel selon l'une des revendications 1 à 18, **caractérisé par le fait que** la matière synthétique servant au revêtement du profilé métallique (5), et la matière synthétique remplissant la fonction de seconde partie (4) dévolue à l'occultation de la section transversale creuse, sont des matières thermoplastiques aptes à l'injection.

20. Elément structurel selon l'une des revendications précédentes, **caractérisé par le fait que** la seconde partie (4) renferme une armature métallique, éventuellement un profilé métallique s'étendant sur au moins une part de sa section transversale.
